# EUROPÄISCHE PATENTANMELDUNG

(11) **EP 1 369 679 A2**
(43) Veröffentlichungstag der Anmeldung: **10.12.2003**
(21) Anmeldenummer: 03011611.5
(22) Anmeldetag: 22.05.2003
(51) Int. Cl.: G01M 3/28

(54) **Verfahren und Vorrichtung zum Prüfen von Feuerwehrschläuchen**

(30) Priorität: 28.05.2002 DE 10223814
(71) Anmelder: Bormann, Heinz, 31749 Auetal (DE)
(72) Erfinder: Bormann, Heinz, 31749 Auetal (DE)
(74) Vertreter: Scheffler, Jörg

(57) **Zusammenfassung**

Die Erfindung betrifft ein Verfahren, sowie eine Vorrichtung (1) zum Prüfen von Feuerwehrschläuchen (2, 3, 4, 5), bei dem in einem Arbeitsgang mehrere Feuerwehrschläuche (2, 3, 4, 5) unterschiedlichen Typs mit voneinander abweichenden Prüfdrücken beaufschlagt und auf Dichtigkeit überprüft werden. Hierzu werden die einzelnen Feuerwehrschläuche (2, 3, 4, 5) jeweils an einen Füllstutzen (6, 7, 8, 9) angeschlossen. Die volumenmäßige Befüllung der Feuerwehrschläuche (2, 3, 4, 5) erfolgt mittels einer Füllleitung (10, 11, 12, 13), während die Druckbeaufschlagung der Feuerwehrschläuche (2, 3, 4, 5) durch eine separate Druckleitung (14, 15, 16, 17) erfolgt. Durch einen dem jeweiligen Feuerwehrschlauch (2, 3, 4, 5) zugeordneten Druckaufnehmer (26, 27, 28, 29) wird die Lokalisierung eines defekten Feuerwehrschlauches (2, 3, 4, 5) erheblich vereinfacht. Ein Druckverlust in einem der Feuerwehrschläuche (2, 3, 4, 5), beispielsweise verursacht durch eine undichte Stelle oder einen platzenden Feuerwehrschlauch (2, 3, 4, 5), bleibt durch in der Füllleitung (10, 11, 12, 13) bzw. der Druckleitung (14, 15, 16, 17) angeordnete Absperrelemente (22, 23, 24, 25, 30, 31, 32, 33) ohne Einfluss auf den Prüfdruck in den übrigen Feuerwehrschläuchen (2, 3, 4, 5). Durch die Ansteuerung der Absperrelemente (22, 23, 24, 25, 30, 31, 32, 33) mittels einer Steuereinrichtung wird eine Möglichkeit geschaffen, das Verfahren zu automatisieren.

## Beschreibung

Die Erfindung betrifft ein Verfahren zum Prüfen von einem oder mehreren Feuerwehrschläuchen mittels eines Druckmediums. Weiterhin betrifft die Erfindung eine Vorrichtung zum Prüfen von einem oder mehreren Feuerwehrschläuchen mittels eines Druckmediums, die jeweils durch einen Füllstutzen mit einer Füllleitung für das Druckmedium verbunden sind.

Ein Verfahren und eine Vorrichtung der eingangs genannten Art sind in der Praxis durch offenkundige Vorbenutzung bekannt und zählen dadurch zum Stand der Technik. Bei dieser Vorrichtung bzw. bei diesem Verfahren besteht bereits die Möglichkeit mehrere Feuerwehrschläuche gleichzeitig auf Dichtigkeit zu prüfen. Hierbei werden die Feuerwehrschläuche jeweils an einen Füllstutzen angeschlossen und anschließend mittels einer Füllleitung mit Druckwasser befüllt. Ist ein vorbestimmter Prüfdruck erreicht, werden die einzelnen Feuerwehrschläuche manuell, beispielsweise durch eine Bedienperson auf Dichtigkeit überprüft. Die Füllleitung ist mit einer Pumpe verbunden, welche bei einem hohen Fördervolumen einen hohen Druck bereitstellen muss.

Dabei hat es sich bei dieser Vorrichtung als nachteilig erwiesen, dass alle angeschlossenen Feuerwehrschläuche mit demselben Prüfdruck beaufschlagt werden. In der Praxis müssen Feuerwehrschläuche je nach Einsatzgebiet, Material und Abmessungen allerdings mit unterschiedlichen Prüfdrucken geprüft werden. Wenn also mehrere Feuerwehrschläuche gleichzeitig geprüft werden sollen, so müssen ausreichend Feuerwehrschläuche gleichen Typs vorhanden sein, was unter Umständen einen erheblichen Sammel- und Lageraufwand erfordert oder der jeweils nicht benötigte Füllstutzen muss verschlossen werden.
Weiterhin hat es sich als nachteilig erwiesen, dass bei einem plötzlichen Druckverlust in einem der Schläuche, beispielsweise durch ein Platzen, der Prüfdruck in allen anderen Feuerwehrschläuche schlagartig reduziert wird, wodurch eine Prüfung der anderen Schläuche unmöglich wird. Bereits eine undichte Stelle in einem der Feuerwehrschläuche führt zu einem Druckverlust in dem betreffenden Feuerwehrschlauch und damit zu einer Beeinflussung des Prüfdrucks in den anderen gleichzeitig zu prüfenden Feuerwehrschläuchen. Daher kann aus einem Druckverlust nicht zugleich auf eine undichte Stelle eines bestimmten Feuerwehrschlauches geschlossen werden.

Ein weiterer Nachteil des bekannten Verfahrens ergibt sich aus der Tatsache, dass die Prüfung der Feuerwehrschläuche manuell durch eine Bedienperson erfolgt. Hierzu muss die Bedienperson jeden Schlauch durch Sichtprüfung überprüfen, was bei der nicht unerheblichen Länge der Feuerwehrschläuche einen enormen Zeitaufwand bedeutet.

Es hat sich weiterhin als nachteilig erwiesen, dass mittels der Pumpe sowohl eine großes Volumen zur Befüllung der Feuerwehrschläuche als auch ein hoher Prüfdruck bereitgestellt werden muss. Dadurch wird eine leistungsstarke Pumpe mit entsprechend großem Bauraum und hohen Anschaffungskosten benötigt.

Der Erfindung liegt die Aufgabe zugrunde, ein Verfahren zu schaffen, durch welche die Prüfung von mehreren Feuerwehrschläuchen wesentlich vereinfacht wird. Weiterhin liegt der Erfindung die Aufgabe zugrunde, eine Vorrichtung zu schaffen, durch welche die Prüfung von mehreren Feuerwehrschläuchen wesentlich vereinfacht wird. Insbesondere soll dabei der manuelle Eingriff des Bedienpersonals verringert werden.

Die erstgenannte Aufgabe wird erfindungsgemäß mit einem Verfahren gemäß den Merkmalen des Patentanspruchs 1 gelöst. Die Unteransprüche 2 bis 4 betreffen besonders zweckmäßige Weiterbildungen der Erfindung.

Erfindungsgemäß ist also ein Verfahren vorgesehen, bei dem jeder Feuerwehrschlauch an jeweils einem Füllstutzen angeschlossen, zunächst mittels einer mit dem jeweiligen Füllstutzen verbundenen Füllleitung mit dem Druckmedium befüllt und ein Absperrelement der Füllleitung geschlossen wird und anschließend der Druck in dem Feuerwehrschlauch mittels einer ebenfalls mit dem jeweiligen Füllstutzen verbundenen Druckleitung bis zum Erreichen eines Prüfdruckes erhöht und nach dem Erreichen des Prüfdrucks ein Absperrelement der Druckleitung geschlossen wird, wobei mittels eines dem jeweiligen Feuerwehrschlauch zugeordneten Druckaufnehmers ein Druckabfall erfasst wird. Hierdurch wird eine Möglichkeit geschaffen, in einer Vorrichtung verschiedene Typen von Feuerwehrschläuchen mit unterschiedlichen Prüfdrücken zu beaufschlagen und auf Dichtigkeit zu überprüfen. Ein beispielsweise durch eine undichte Stelle verursachter Druckverlust in einem der Feuerwehrschläuche wird durch den jeweiligen Druckaufnehmer erfasst. Hierdurch wird eine Lokalisierung des defekten Feuerwehrschlauches erleichtert. Der erhebliche Aufwand der Sichtprüfung der gesamten Feuerwehrschläuche durch das Bedienpersonal nach dem Stand der Technik kann entfallen. Durch das Schließen der Absperrelemente in der Druckleitung und in der Füllleitung bleibt ein Druckverlust in einem der Feuerwehrschläuche, beispielsweise verursacht durch eine undichte Stelle oder durch einen platzenden Feuerwehrschlauch, ohne Einfluss auf den Prüfdruck in den anderen Feuerwehrschläuchen. Durch die Trennung der Füllleitung und der Druckleitung kann der Querschnitt der jeweiligen Leitung und die Leistung der zugeordneten Druckversorgungseinheiten an den jeweiligen Einsatzfall angepasst werden.

Eine zweckmäßige Weiterbildung des Verfahrens wird dadurch erreicht, dass die Absperrelemente in Abhängigkeit von Signalen des Druckaufnehmers mittels einer Steuereinrichtung unabhängig voneinander betätigt werden. Hierdurch wird erreicht, dass die Befüllung und die Druckbeaufschlagung der einzelnen Feuerwehrschläuche automatisiert erfolgt. Die Tätigkeiten des Bedienpersonals reduzieren sich somit auf das Anschließen der Feuerwehrschläuche und auf die Überwachung der Druckaufnehmer und gegebenenfalls auf die Sichtprüfung eines Feuerwehrschlauches, wenn ein Druckverlust durch einen Druckaufnehmer festgestellt wird.

Eine andere besonders vorteilhafte Weiterbildung des Verfahrens wird dadurch geschaffen, dass die einzelnen Feuerwehrschläuche unabhängig voneinander nach einer vorbestimmten Prüfsequenz geprüft werden. Hierdurch wird erreicht, dass Feuerwehrschläuche mit unterschiedlichen Prüfzeiten mittels der Vorrichtung geprüft werden können. Die einzelnen Phasen der Prüfsequenz werden in jedem Feuerwehrschlauch unabhängig von dem Fortschritt der Prüfsequenz in den benachbarten Feuerwehrschläuchen durchlaufen. So befindet sich beispielsweise ein Feuerwehrschlauch in der Phase der Befüllung, während sich ein anderer Feuerwehrschlauch bereits in der Phase der Druckerhöhung befindet, in einem weiteren Feuerwehrschlauch ist der Prüfdruck bereits erreicht und wird für eine bestimmte Dauer gehalten.

Eine ebenfalls besonders vorteilhafte Abwandlung des Verfahrens wird auch dadurch erreicht, dass die Feuerwehrschläuche nach einem Entfernen des Druckmediums mit einem Unterdruck beaufschlagt werden. Durch die Beaufschlagung der Feuerwehrschläuche mit einem Unterdruck können auch solche Feuerwehrschläuche geprüft werden, die beispielsweise als Saugleitungen eingesetzt werden. Diese müssen nach internen Vorschriften sowohl einer Druckprüfung mittels eines Druckmediums als auch einer anschließenden Prüfung durch einen Unterdruck bzw. Vakuum unterzogen werden.

Die zweitgenannte Aufgabe, eine Vorrichtung zum Prüfen von einem oder mehreren Feuerwehrschläuchen mittels eines Druckmediums, die jeweils durch einen Füllstutzen mit einer Füllleitung für das Druckmedium verbunden sind, zu schaffen, wird erfindungsgemäß mit einer Vorrichtung gemäß den Merkmalen des Patentanspruchs 5 gelöst. Die Unteransprüche 6 bis 14 betreffen besonders zweckmäßige Weiterbildungen der Erfindung.

Erfindungsgemäβ ist also eine Vorrichtung zum Prüfen von einem oder mehreren Feuerwehrschläuchen vorgesehen, bei welcher der Füllstutzen einerseits durch ein Absperrelement mit einer Füllleitung und andererseits durch ein weiteres Absperrelement mit einer Druckleitung verbunden ist und dass dem jeweiligen Feuerwehrschlauch ein den Prüfdruck überwachender Druckaufnehmer zugeordnet ist. Mittels dieser Vorrichtung wird also eine Möglichkeit geschaffen, mehrere Feuerwehrschläuche gleichzeitig zu prüfen und dabei die einzelnen Feuerwehrschläuche mit voneinander abweichenden Prüfdrücken zu beaufschlagen. Somit können Feuerwehrschläuche unterschiedlichen Typs zeitgleich geprüft werden. Ebenso wird durch die Absperrelemente eine Möglichkeit geschaffen, einen oder mehrere Füllstutzen abzusperren und die Anzahl der zu prüfenden Feuerwehrschläuche zu variieren, beispielsweise wenn nur ein einzelner Feuerwehrschlauch geprüft werden soll. Ein Druckabfall, verursacht durch undichte Stellen, oder ein plötzlicher Druckverlust, verursacht durch einen geplatzten Feuerwehrschlauch, bleiben ohne Einfluss auf den Prüfdruck in den anderen Feuerwehrschläuchen. Dadurch kann die Störanfälligkeit der Vorrichtung erheblich reduziert wird. Weiterhin kann durch den jedem Feuerwehrschlauch zugewiesenen Druckaufnehmer der Feuerwehrschlauch mit der undichten Stelle sofort identifiziert werden, da der Druckaufnehmer einen Druckabfall erfasst. Hierdurch kann die zeitaufwendige Sichtprüfung durch das Bedienpersonal wesentlich erleichtert werden.

Eine besonders zweckmäßige Weiterbildung der Erfindung wird dadurch erreicht, dass die Vorrichtung eine Steuereinrichtung aufweist, durch welche die Absperrelemente in der Füllleitung und/oder der Druckleitung in Abhängigkeit der Signale der Druckaufnehmer unabhängig voneinander ansteuerbar sind. Hierdurch wird erreicht, dass die Prüfung der Feuerwehrschläuche weitestgehend automatisiert erfolgt. Durch das Steuerelement werden die Absperrelemente derart angesteuert, dass sie abhängig vom Druck in dem jeweiligen Feuerwehrschlauch geöffnet und geschlossen werden. Die Tätigkeiten des Bedienpersonals reduzieren sich hierdurch ausschließlich auf das Anschließen der Feuerwehrschläuche und auf das Überwachen der Druckaufnehmer auf einen eventuellen Druckverlust in den Feuerwehrschläuchen und gegebenenfalls auf die Sichtprüfung eines Feuerwehrschlauches, wenn ein Druckverlust durch einen Druckaufnehmer festgestellt wird.

Dabei hat es sich als besonders praxisnah erwiesen, dass zumindest eines der Absperrelemente als ein Ventil ausgebildet ist. Hierdurch wird eine besonders einfache und zuverlässige Möglichkeit geschaffen, die Verbindung zwischen Füllstutzen und Füllleitung oder zwischen Füllstutzen und Druckleitung zu öffnen oder zu sperren. Gleichzeitig ist eine sichere Ansteuerung des Ventils durch ein Steuerelement problemlos möglich. In der Praxis hat sich der Einsatz von Kugelhahnventilen, insbesondere von elektrisch bzw. motorisch verstellbaren, als besonders vorteilhaft erwiesen.

Eine weitere besonders erfolgversprechende Abwandlung wird dadurch erreicht, dass das Ventil ein Magnetventil ist, wobei das der Druckleitung zugeordnete Magnetventil in eine Durchflussrichtung und das der Füllleitung zugeordnete Magnetventil entgegengesetzt der Durchflussrichtung eingebaut ist. Der Einsatz eines Magnetventils ist aufgrund der kurzen Reaktionszeit beim Schließen und Öffnen besonders vorteilhaft. Ein unerwünschtes Öffnen eines Schließelementes des Magnetventils aufgrund unterschiedlicher Druckverhältnisse zwischen Feuerwehrschlauch und Füllleitung bzw. Druckleitung wird durch den erfindungsgemäßen Einbau vermieden. Als Durchflussrichtung wird der Durchfluss des Druckmediums von der Druckleitung bzw. der Füllleitung in die Feuerwehrschläuche festgelegt. Dabei ist das Magnetventil in der Druckleitung derart eingebaut, dass in der Durchflussrichtung eine Schließkraft des Schließelements durch den höheren Druck in der Druckleitung verstärkt wird. Das Magnetventil in der Füllleitung hingegen ist entgegengesetzt zu der Durchflussrichtung eingebaut. Hierbei wird die Schließkraft des Schließelementes durch den höheren Druck in dem jeweiligen Feuerwehrschlauch verstärkt. Das jeweilig höhere Druckniveau verstärkt die Schließkraft des jeweiligen Schließelementes, so dass ein Druckverlust durch unerwünschtes Öffnen des Schließelementes vermieden werden kann.

Eine andere besonders zweckmäßige Weiterbildung wird dadurch geschaffen, dass in der Druckleitung zwischen dem Füllstutzen und dem Absperrelement ein Rückschlagventil angeordnet ist. Hierdurch wird ein plötzlicher Druckverlust in dem Feuerwehrschlauch durch eine defektes Absperrelement in der Druckleitung oder eine defekte Pumpe in der Druckleitung vermieden.

Eine andere besonders praxisnahe Ausführungsform wird dadurch erreicht, dass die Füllleitung zur Bereitstellung des Druckmediums in den Feuerwehrschläuchen mit einer Pumpe verbunden ist. Hierdurch wird auf besonders einfache und effektive Art und Weise die Befüllung der Feuerwehrschläuche mit dem Druckmedium erreicht. Die Pumpe ist ausschließlich für die Befüllung der Feuerwehrschläuche, nicht aber für den Druckaufbau verantwortlich. Hierdurch kann die leistungsstarke Pumpe nach dem Stand der Technik durch eine Pumpe mit geringerer Leistung, geringerem Bauraum und geringeren Anschaffungskosten ersetzt werden. Da die Absperrelemente nach dem Befüllen der Feuerwehrschläuche geschlossen werden, muss die Pumpe nicht kontinuierlich arbeiten, sie kann nach dem Schließen der Absperrelemente in den Füllleitungen abgestellt werden.

Eine weitere vorteilhafte Abwandlung der Vorrichtung wird dadurch geschaffen, dass die Druckleitung zur Einstellung des Prüfdrucks in den Feuerwehrschläuchen mit einer Pumpe verbunden ist. Hierdurch wird auf besonders effektive Art und Weise der Druck in den Feuerwehrschläuchen erhöht, bis der jeweilige Prüfdruck in den einzelnen Feuerwehrschläuchen erreicht ist. Diese Pumpe ist im wesentlichen für den Druckaufbau, nicht aber für die Befüllung der Feuerwehrschläuche bestimmt. Hierdurch kann die volumenstarke Pumpe der Füllleitung nach dem Stand der Technik durch eine zum Druckaufbau bestimmte Pumpe ersetzt werden, wodurch der Wirkungsgrad wesentlich erhöht wird.

Eine besonders vorteilhafte Ausführungsform der Vorrichtung wird dadurch erreicht, dass an den Füllstutzen beide Schlauchenden des Feuerwehrschlauches anschließbar sind. Hierdurch ist es möglich, die Feuerwehrschläuche durch beide Schlauchenden sowohl zu befüllen als auch den Druck aufzubauen, wodurch die Befüllung des Feuerwehrschlauches schneller erfolgt und der erforderliche Prüfdruck ebenfalls schneller erreicht ist. Hierdurch wird auch die gesamte Prüfdauer des Feuerwehrschlauches reduziert. Zugleich braucht der Feuerwehrschlauch nur auf seine halbe Länge ausgelegt werden, wodurch der Platzbedarf reduziert wird.

Eine andere besonders zweckmäßige Abwandlung wird auch dadurch geschaffen, dass die Feuerwehrschläuche mit einem Unterdruck beaufschlagbar sind. Hierdurch können auch solche Feuerwehrschläuche mittels der vorliegenden Vorrichtung überprüft werden, die beispielsweise als Saugleitungen eingesetzt werden. Somit wird es erstmals ermöglicht, mittels einer einzigen Vorrichtung ein Prüfen sowohl von Druckleitungen als auch von Saugleitungen durchzuführen. Die Feuerwehrschläuche müssen nach der Druckprüfung mittels eines Druckmediums nicht mehr in einer weiteren Vorrichtung mittels eines Unterdrucks geprüft werden. Somit kann auf eine zusätzliche Prüfvorrichtung zum Prüfen der Feuerwehrschläuche mittels Unterdruck verzichtet werden.

Dabei erweist es sich als besonders vorteilhaft, dass die Füllleitung und/oder die Druckleitung zur Bereitstellung eines Unterdrucks mit einer Pumpe verbunden sind. Bei der Pumpe kann es sich einerseits um eine separate Unterdruckpumpe handeln aber andererseits auch um eine Pumpe, die sowohl für die Erzeugung eines Unterdrucks bzw. eines Vakuums, als auch für die Befüllung der Feuerwehrschläuche mit dem Druckmedium bzw. für die Einstellung des erforderlichen Prüfdrucks ausgelegt ist.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
Fig.1 eine schematisierte Draufsicht einer Vorrichtung zum Prüfen von mehreren Feuerwehrschläuchen;
Fig.2 ein als Magnetventil ausgebildetes Absperrelement in einer Druckleitung;
Fig.3 ein als Magnetventil ausgebildetes Absperrelement in einer Füllleitung.

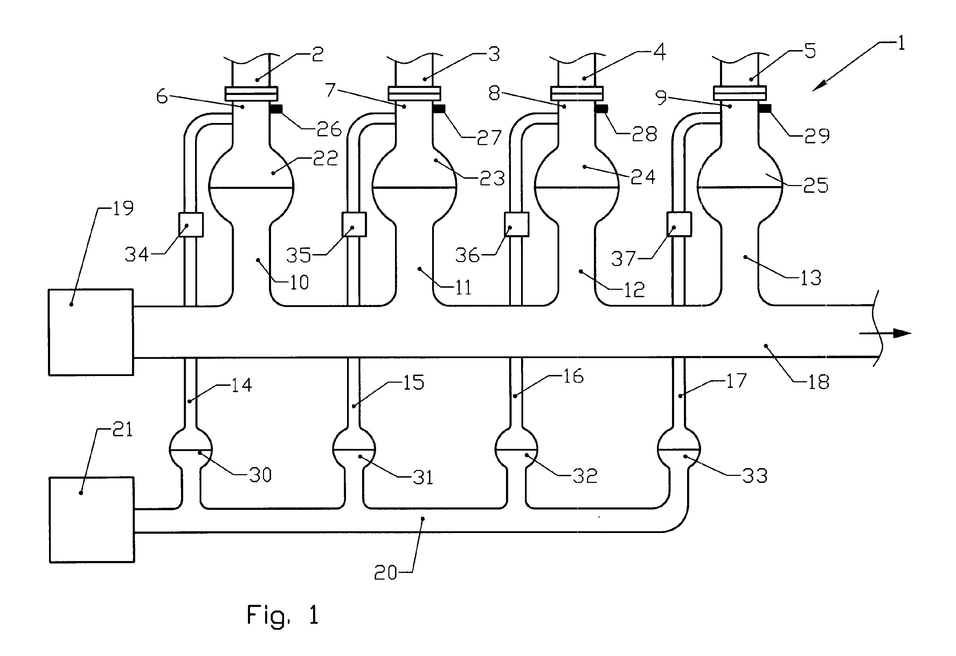

Figur 1 zeigt eine schematisierte Draufsicht einer Vorrichtung 1 zum Prüfen von mehreren Feuerwehrschläuchen 2, 3, 4, 5 auf Dichtigkeit. Da sich die einzelnen Feuerwehrschläuche 2, 3, 4, 5 bezüglich Einsatzort, Einsatzzweck und dadurch auch bezüglich Material, Länge und Durchmesser erheblich unterscheiden können, müssen die Feuerwehrschläuche 2, 3, 4, 5 zur Prüfung auf Dichtigkeit jeweils mit unterschiedlichen Prüfdrücken beaufschlagt werden. Weiterhin muss, je nach Typ, der Prüfdruck eine unterschiedlich lange Zeitdauer aufrecht erhalten werden. Zur Realisierung dieser unterschiedlichen Prüfdrücke und der unterschiedlichen Prüfzeiten weist die Vorrichtung 1 für jeden Feuerwehrschlauch 2, 3, 4, 5 jeweils einen Füllstutzen 6, 7, 8, 9 auf, an welche die Feuerwehrschläuche 2, 3, 4, 5 angeschlossen werden. Jedem Füllstutzen 6, 7, 8, 9 und damit jedem Feuerwehrschlauch 2, 3, 4, 5 ist jeweils eine Füllleitung 10, 11, 12, 13 zum Befüllen und eine Druckleitung 14, 15, 16, 17 zur Beaufschlagung der Feuerwehrschläuche 2, 3, 4, 5 mit einem Prüfdruck zugeordnet. Zur Förderung eines Druckmediums in die Feuerwehrschläuche 2, 3, 4, 5 sind die einzelnen Füllleitungen 10, 11, 12, 13 über eine gemeinsame Füllschiene 18 mit einer Pumpe 19 verbunden. Die einzelnen Druckleitungen 14, 15, 16, 17 sind durch eine gemeinsame Druckschiene 20 mit einer weiteren Pumpe 21 verbunden, um den gewünschten Prüfdruck in den Feuerwehrschläuchen 2, 3, 4, 5 aufzubauen.
Nach dem manuellen Anschließen der Feuerwehrschläuche 2, 3, 4, 5 an die Füllstutzen 6, 7, 8, 9 werden die Feuerwehrschläuche 2, 3, 4, 5 mittels der jeweiligen Füllleitung 10, 11, 12, 13 mit dem Druckmedium, beispielsweise Wasser, befüllt. Hierzu wird zunächst ein Absperrelement 22, 23, 24, 25 in der jeweiligen Füllleitung 10, 11, 12, 13 geöffnet und die Pumpe 19 fördert das erforderliche Volumen des Druckmediums über die Füllschiene 18 und die Füllleitungen 10, 11, 12, 13 in die jeweiligen Feuerwehrschläuche 2, 3, 4, 5. Zur Entlüftung ist jedem Feuerwehrschlauch 2, 3, 4, 5 ein in der Figur 1 nicht dargestelltes Entlüftungsventil zugeordnet. Wenn einer der Feuerwehrschläuche 2, 3, 4, 5 vollständig mit dem Druckmedium befüllt ist, wird das Absperrelement 22, 23, 24, 25 in der jeweils zugeordneten Füllleitung 10, 11, 12, 13 geschlossen. Wenn alle Feuerwehrschläuche 2, 3, 4, 5 mit dem gewünschten Volumen des Druckmediums befüllt wurden und somit alle Absperrelemente 22, 23, 24, 25 in den Füllleitungen 10, 11, 12, 13 geschlossen sind kann die Pumpe 19 abgeschaltet werden. Sobald einer der Feuerwehrschläuche 2, 3, 4, 5 gefüllt ist und das zugehörige Absperrelement 22, 23, 24, 25 in der Füllleitung 10, 11, 12, 13 geschlossen wurde, wird mittels der ebenfalls dem jeweiligen Feuerwehrschlauch 2, 3, 4, 5 zugeordneten Druckleitung 14, 15, 16, 17 der Druck in den Feuerwehrschläuchen 2, 3, 4, 5 erhöht bis der jeweils erforderliche Prüfdruck erreicht ist. Zur Überwachung des Drucks in den einzelnen Feuerwehrschläuchen 2, 3, 4, 5 ist jedem Füllstutzen 6, 7, 8, 9 jeweils ein Druckaufnehmer 26, 27, 28, 29 zugeordnet. Bei Erreichen des jeweiligen Prüfdruckes in einem der Feuerwehrschläuche 2, 3, 4, 5 wird das der jeweiligen Druckleitung 14, 15, 16, 17 zugeordnete Absperrelement 30, 31, 32, 33 geschlossen. Anschließend wird dieser Prüfdruck eine je nach Schlauchtyp unterschiedlich lange Dauer gehalten. Während dieser Prüfzeit wird der Druckaufnehmer 26, 27, 28, 29 auf Druckabfall überwacht. Nach Beendigung der Prüfzeit wird das Absperrelement 22, 23, 24, 25 in der Füllleitung 10, 11, 12, 13 geöffnet und das Druckmedium wird über die Füllschiene 18 abgelassen, was in der Figur 1 durch einen Pfeil angedeutet wird.

Die Absperrelemente 22, 23, 24, 25, in der Füllleitung 10, 11, 12, 13 und die Absperrelemente 30, 31, 32, 33 in der Druckleitung 14, 15, 16, 17 werden in Abhängigkeit einer nicht darstellten Steuereinrichtung unabhängig voneinander angesteuert. Hierdurch können die beschriebenen Verfahrensschritte automatisiert durchgeführt werden. Die Verfahrenschritte werden an jedem Feuerwehrschlauch 2, 3, 4, 5 isoliert voneinander durchgeführt, unabhängig von dem Fortschritt des Verfahrens in dem jeweils benachbarten Feuerwehrschlauch 2, 3, 4, 5.

Zum Halten des Prüfdruckes ist in den Druckleitungen 14, 15, 16, 17 zusätzlich jeweils ein Rückschlagventil 34, 35, 36, 37 angeordnet, durch welches Druckverluste in den Feuerwehrschläuchen 2, 3, 4, 5 beispielsweise verursacht durch ein defektes Absperrelement 30, 31, 32, 33 oder eine defekte Pumpe 21, verhindert werden.

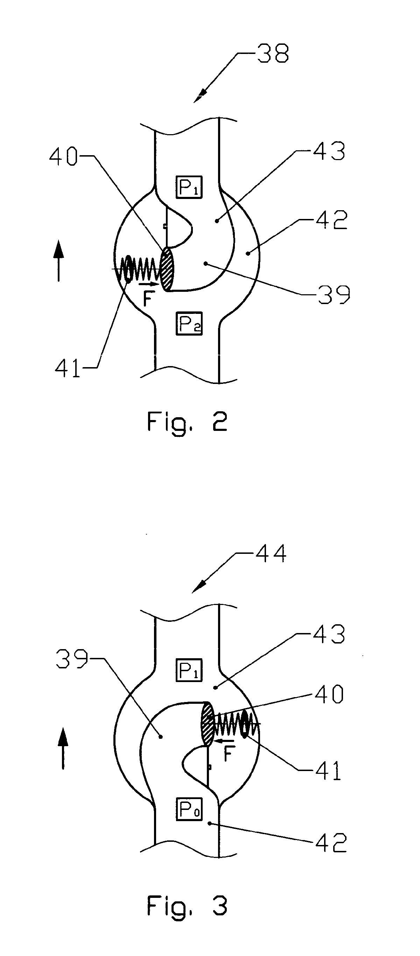

Figur 2 zeigt ein als Magnetventil 38 ausgebildetes Absperrelement 30, 31, 32, 33 in einer Druckleitung 14, 15, 16, 17 in einer geschlossenen Stellung. Die Durchflussrichtung des Duckmediums beim Druckaufbau in den Feuerwehrschläuchen 2, 3, 4, 5 ist durch einen Richtungspfeil dargestellt. In dem Feuerwehrschlauch 2, 3, 4, 5 ist der gewünschte Prüfdruck erreicht und somit wird eine Durchgangsöffnung 39 durch ein Schließelement 40 verschlossen. Das Schließelement 40 wird durch ein als Feder ausgebildetes Stellglied 41 von einer offenen in die dargestellte geschlossene Stellung überführt. Das Stellglied 41 wirkt mit einer Kraft F auf das Schließelement 40 und hält das Schließelement 40 dadurch geschlossen. Das Schließelement 40 schließt einen pumpenseitigen Ventilraum 42 gegen einen füllstutzenseitigen Ventilraum 43 ab. In dem füllstutzenseitigen Ventilraum 43 liegt der jeweilige Prüfdruck P1 und in dem pumpenseitigen Ventilraum 42 liegt ein Druck P2 an, wobei der Druck P2 größer oder gleich dem Prüfdruck P1 ist. Der größere Druck P2 im pumpenseitigen Ventilraum 42 unterstützt die Schließkraft des Schließelementes 40 und verhindert ein unerwünschtes Öffnen des Schließelementes 40 und somit einen Druckverlust in dem jeweiligen Feuerwehrschlauch 2, 3, 4, 5. Auch bei einem plötzlichen Druckabfall in einem der Feuerwehrschläuche 2, 3, 4, 5, beispielsweise durch einen platzenden Feuerwehrschlauch 2, 3, 4, 5, bleibt das Schließelement 40 geschlossen, so dass der plötzliche Druckabfall in einem der Feuerwehrschläuche 2, 3, 4, 5 ohne Einfluss auf den Druckaufbau in den ändern Feuerwehrschläuchen 2, 3, 4, 5 bleibt.

Figur 3 zeigt ein als Magnetventil 44 ausgebildetes Absperrelement 22, 23 24 25 in einer Fülileitung 10, 11, 12, 13 in einer geschlossenen Stellung. Gegenüber der Figur 2 identische Bauteile sind in der Figur 3 mit denselben Bezugszeichen versehen. Nachdem die einzelnen Feuerwehrschläuche 2, 3, 4, 5 mittels der Füllleitung 10, 11, 12, 13 mit dem Druckmedium befüllt sind wird das Schließelement 40 mittels des Stellgliedes 41 in die dargestellte Stellung überführt und sowohl in dem pumpenseitigen Ventilraum 42 als auch in dem füllstutzenseitigen Ventilraum 43 liegt ein Druck P0 an. Anschließend wird der Druck in dem füiistutzenseitigen Ventilraum 43 erhöht, bis der jeweilige Prüfdruck P1 in den einzelnen Feuerwehrschläuchen 2, 3, 4, 5 erreicht ist. Der Prüfdruck P1 im füllstutzenseitigen Ventilraum 43 ist höher als der Druck P0 im pumpenseitigen Ventilraum 42 . Durch den höheren Druck P1 wird die Schließkraft des Schließelementes 40 verstärkt und ein unerwünschtes Öffnen des Schließelementes 40 kann verhindert werden.
Dabei ist es nicht zwingend erforderlich, dass die Absperrelemente 22, 23, 24, 25, 30, 31, 32, 33 als Magnetventile ausgebildet sind. Beispielsweise ist es denkbar, dass die Absperrelemente 22, 23, 24, 25 aufgrund des hohen Flüssigkeitsvolumens in der Füllleitung 10, 11, 12, 13 als elektrische oder motorische Kugelhahnventile ausgeführt werden.

## Patentansprüche

1. Verfahren zum Prüfen von ein oder mehreren Feuerwehrschläuchen mittels eines Druckmediums, bei dem jeder Feuerwehrschlauch an jeweils einem Füllstutzen angeschlossen, zunächst mittels einer mit dem jeweiligen Füllstutzen verbundenen Füllleitung mit dem Druckmedium befüllt und ein Absperrelement der Füllleitung geschlossen wird und anschließend der Druck in dem Feuerwehrschlauch mittels einer ebenfalls mit dem jeweiligen Füllstutzen verbundenen Druckleitung bis zum Erreichen eines Prüfdruckes erhöht und nach dem Erreichen des Prüfdrucks ein Absperrelement der Druckleitung geschlossen wird, wobei mittels eines dem jeweiligen Feuerwehrschlauch zugeordneten Druckaufnehmers ein Druckabfall erfasst wird.

2. Verfahren nach Anspruch 1, **dadurch gekennzeichnet, dass** die Absperrelemente in Abhängigkeit von Signalen des Druckaufnehmers mittels einer Steuereinrichtung unabhängig voneinander betätigt werden.

3. Verfahren nach Anspruch 1 oder 2, **dadurch gekennzeichnet, dass** die einzelnen Feuerwehrschläuche unabhängig voneinander nach einer vorbestimmten Prüfsequenz geprüft werden.

4. Verfahren nach zumindest einem der vorhergehenden Ansprüche, **dadurch gekennzeichnet, dass** die Feuerwehrschläuche nach einem Entfernen des Druckmediums mit einem Unterdruck beaufschlagt werden.

5. Vorrichtung (1) zum Prüfen von einem oder mehreren Feuerwehrschläuchen (2, 3, 4, 5) mittels eines Druckmediums, die jeweils durch einen Füllstutzen (6, 7, 8, 9) mit einer Füllleitung (10, 11, 12, 13) für das Druckmedium verbunden sind, **dadurch gekennzeichnet, dass** der Füllstutzen (6, 7, 8, 9) einerseits durch ein Absperrelement (22, 23, 24, 25) mit der Füllleitung (10, 11, 12, 13) und andererseits durch ein weiteres Absperrelement (30, 31, 32, 33) mit einer Druckleitung (14, 15, 16, 17) verbunden ist und dass dem jeweiligen Feuerwehrschlauch (2, 3, 4, 5) ein den Prüfdruck überwachender Druckaufnehmer (26, 27, 28, 29) zugeordnet ist.

6. Vorrichtung nach Anspruch 5 **dadurch gekennzeichnet, dass** die Vorrichtung (1) eine Steuereinrichtung aufweist, durch welche die Absperrelemente (22, 23, 24, 25, 30, 31, 32, 33) in der Füllleitung (10, 11, 12, 13) und/oder der Druckleitung (14, 15, 16, 17) in Abhängigkeit der Signale der Druckaufnehmer (26, 27, 28, 29) unabhängig voneinander ansteuerbar sind

7. Vorrichtung nach Anspruch 5 oder 6, **dadurch gekennzeichnet, dass** zumindest eines der Absperrelemente (22, 23, 24, 25, 30, 31, 32, 33) als ein Ventil ausgebildet ist.

8. Vorrichtung nach Anspruch 7, **dadurch gekennzeichnet, dass** das Ventil ein Magnetventil (38, 44) ist, wobei das der Druckleitung (14, 15, 16, 17) zugeordnete Magnetventil (38) in eine Durchflussrichtung und das der Füllleitung (10, 11, 12, 13) zugeordnete Magnetventil (44) entgegengesetzt der Durchflussrichtung eingebaut ist.

9. Vorrichtung nach zumindest einem der Ansprüche 5 bis 8, **dadurch gekennzeichnet, dass** in der Druckleitung (14, 15, 16, 17) zwischen dem Füllstutzen (6, 7, 8, 9) und dem Absperrelement (30, 31, 32, 33) ein Rückschlagventil (34, 35, 36, 37) angeordnet ist.

10. Vorrichtung nach zumindest einem der Ansprüche 5 bis 9, **dadurch gekennzeichnet, dass** die Füllleitung (10, 11, 12, 13) zur Bereitstellung des Druckmediums in den Feuerwehrschläuchen (2, 3, 4, 5) mit einer Pumpe (19) verbunden ist.

11. Vorrichtung nach zumindest einem der Ansprüche 5 bis 10, **dadurch gekennzeichnet, dass** die Druckleitung (14, 15, 16, 17) zur Einstellung des Prüfdrucks in den Feuerwehrschläuchen (2, 3, 4, 5) mit einer Pumpe (21) verbunden ist.

12. Vorrichtung nach zumindest einem der Ansprüche 5 bis 11, **dadurch gekennzeichnet, dass** an den Füllstutzen (6, 7, 8, 9) beide Schlauchenden des Feuerwehrschlauches (2, 3, 4, 5) anschließbar sind.

13. Vorrichtung nach zumindest einem der vorhergehenden Ansprüche, **dadurch gekennzeichnet, dass** die Feuerwehrschläuche (2, 3, 4, 5) mit einem Unterdruck beaufschlagbar sind.

14. Vorrichtung nach zumindest einem der vorhergehenden Ansprüche, **dadurch gekennzeichnet, dass** die Füllleitung (10, 11, 12, 13) und/oder die Druckleitung (14, 15, 16, 17) zur Bereitstellung eines Unterdrucks mit einer Pumpe verbunden sind.
